# EUROPEAN PATENT APPLICATION

(11) **EP 4 651 242 A1**
(43) Date of publication of application: **19.11.2025**
(21) Application number: 25176525.1
(22) Date of filing: 14.05.2025
(51) Int. Cl.: H01M 4/66

(54) **CURRENT COLLECTORS FOR RECHARGEABLE LITHIUM BATTERIES, ELECTRODE INCLUDING THE SAME, AND RECHARGEABLE LITHIUM BATTERIES**

(30) Priority: 17.05.2024 KR 20240064778
(71) Applicant: SAMSUNG SDI CO., LTD., Yongin-si, Gyeonggi-do 17084 (KR)
(72) Inventor: LIM, Hongjin, 17084 Yongin-si (KR); WOO, Myungheui, 17084 Yongin-si (KR); CHA, Siyoung, 17084 Yongin-si (KR); GOH, Aehui, 17084 Yongin-si (KR); KANG, Inah, 17084 Yongin-si (KR); SIM, Minji, 17084 Yongin-si (KR); JEONG, Hanmam, 17084 Yongin-si (KR); YU, Arum, 17084 Yongin-si (KR)
(74) Representative: Marks & Clerk LLP

(57) **Abstract**

Disclosed are a current collector for a rechargeable lithium battery, an electrode including the current collector, and a rechargeable lithium battery including the current collector. The current collector for a rechargeable lithium battery includes a first metal layer, a second metal layer, and a functional layer between the first metal layer and the second metal layer, the functional layer including a polymer and a foaming agent.

## Description

### BACKGROUND

### 1. Field

Current collectors for rechargeable lithium batteries, electrodes including the current collectors, and rechargeable lithium batteries including the current collectors are disclosed.

### 2. Description of the Related Art

A rechargeable lithium battery may be recharged and has three or more times as high an energy density per unit weight as a conventional lead storage battery, nickel-cadmium battery, nickel-hydrogen battery, nickel-zinc battery and the like. A rechargeable lithium battery may also be charged at a high rate and is thus commercially manufactured for a laptop, a cell phone, an electric tool, an electric bike, and the like.

Such a rechargeable lithium battery is typically manufactured by injecting an electrolyte solution into an electrode assembly, which includes a positive electrode including a positive electrode active material capable of intercalating/deintercalating lithium ions, and a negative electrode including a negative electrode active material capable of intercalating/deintercalating lithium ions.

Currently, as technologies for improving efficiency and capacity of rechargeable lithium batteries have evolved, rechargeable lithium batteries with high energy density are being used across industries (e.g., IT devices, power tools, electric vehicles, etc.).

However, when rechargeable lithium batteries with high energy density are deformed by physical and/or chemical factors (e.g., impact, penetration, overcharge, over-discharge, foreign substance mixing, Li dendrite formation on the negative electrode surface, separator shrinkage, etc.), electric short circuits may occur, thereby leading to, e.g., thermal runaway and/or explosion.

### SUMMARY

Some example embodiments include a current collector that reduces or suppresses electrical short circuit, thermal runaway, and/or explosion of a rechargeable lithium battery due to physical and/or chemical factors.

Some example embodiments include an electrode including the current collector of the above example embodiment.

Some example embodiments include a rechargeable lithium battery including the current collector of the above example embodiment.

Some example embodiments include a current collector for a rechargeable lithium battery including a first metal layer, a second metal layer, and a functional layer between the first metal layer and the second metal layer, the functional layer including a polymer and a foaming agent.

Some example embodiments include an electrode including the current collector of the above example embodiment.

Some example embodiments include a rechargeable lithium battery which includes a positive electrode including a positive electrode current collector, a negative electrode including a negative electrode current collector, and an electrolyte between the positive electrode and the negative electrode, wherein at least one of the positive electrode current collector and the negative electrode current collector includes the current collector according to some example embodiments.

At least some of the above and other features of the invention are set out in the claims.

The current collector according to some example embodiments enables safe operation of a rechargeable lithium battery by reducing or suppressing electrical short-circuiting, thermal runaway, and/or explosion caused by physical and/or chemical factors.

### BRIEF DESCRIPTION OF THE DRAWINGS

FIG. 1 is a schematic view illustrating the mechanism of a conventional current collector during short circuit.

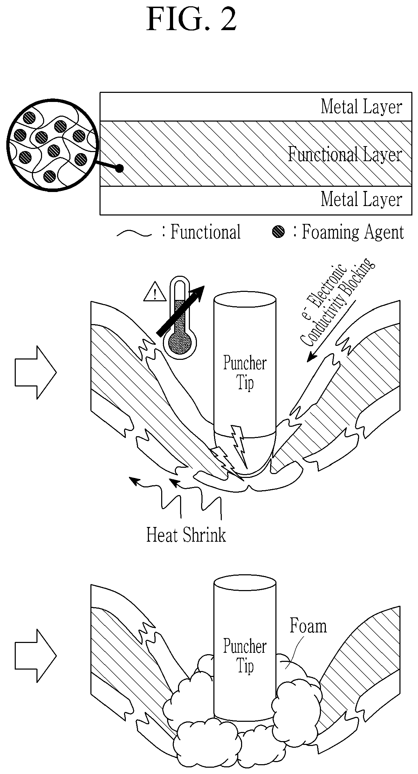

FIG. 2 is a schematic view illustrating a mechanism during short circuit of a current collector of some example embodiments.
FIGS. 3 to 6 are schematic views illustrating rechargeable lithium batteries according to some example embodiments.

### DETAILED DESCRIPTION

Hereinafter, example embodiments will be described in detail. However, the present disclosure is not limited thereto and the present disclosure is defined by the scope of the claims.

As used herein, when a specific definition is not otherwise provided, it will be understood that when an element such as a layer, film, region, or substrate is referred to as being "on" another element, it can be directly on the other element or intervening elements may also be present.

As used herein, when a specific definition is not otherwise provided, the singular may also include the plural. In addition, unless otherwise specified, "A or B" may mean "including A, including B, or including A and B."

As used herein, "combination thereof" may mean a mixture, a stack, a composite, a copolymer, an alloy, a blend, and a reaction product of constituents.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Current Collector

Some example embodiments include a current collector for a rechargeable lithium battery including a first metal layer, a second metal layer, and a functional layer between the first metal layer and the second metal layer, the functional layer including a polymer and a foaming agent.

The first and second metal layers are respectively configured to transmit a current to or from an active material during the charging and discharging, and may constitute a generally known current collector (hereinafter, referred to be a "conventional current collector 1").

However, when the conventional current collector 1 is used, when deformed by physical and/or chemical factors, electric short circuits, thermal runaway, and/or explosion of rechargeable lithium batteries may inevitably occur.

In this regard, another current collector (hereinafter, referred to as a "conventional current collector 2"), in which an intermediate layer made of a polymer is inserted between the first and second metal layers, has been proposed.

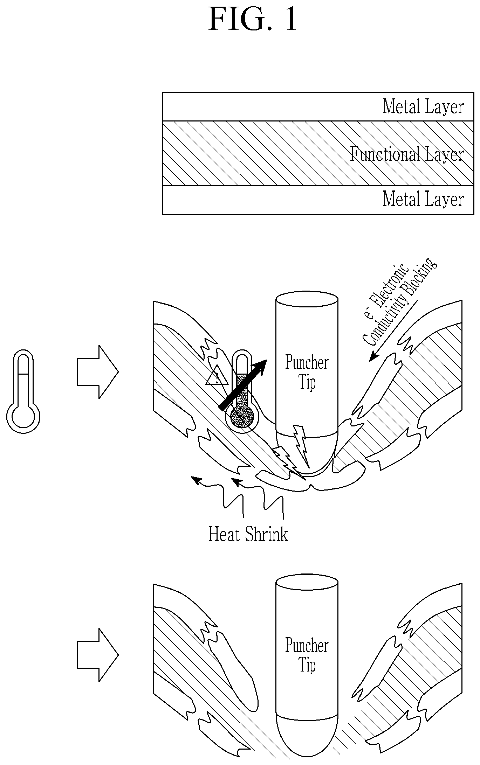

Referring to FIG. 1, when the conventional current collector 2 is deformed by physical and/or chemical factors, the conventional current collector 2 may act as in 1) and 2) below to reduce or suppress the thermal runaway, and/or explosion of rechargeable lithium batteries.
1) First, the intermediate layer made of a polymer has high ductility, compared with the first and second metal layers. Accordingly, when the conventional current collector 2 is deformed by physical and/or chemical factors, the intermediate layer formed of a polymer is physically stretched with thermal shrinkage, while the first and second metal layers are broken. As a result, portions where the first and second metal layers are broken are electrically isolated.
2) Despite the first mechanism discussed above, local short circuits may occur in the conventional current collector 2, generating Joule's heat, wherein the polymer forming the intermediate layer may be thermally deformed and/or exhibit an increase in resistance, thereby blocking current transfer between the first and second metal layers and reducing or suppressing the electric short circuits, thermal runaway, and/or explosion of rechargeable lithium batteries.

However, even when the conventional current collector 2 is used, as rechargeable lithium batteries have higher energy density, the electric short circuits, thermal runaway, and/or explosion may occur faster. In other words, as the energy density of rechargeable lithium batteries is increased, a current collector with faster responsiveness may be advantageous.

Accordingly, some example embodiments include a current collector in which an intermediate layer (hereinafter referred to as a "functional layer") including a foaming agent with the polymer is inserted between the first and second metal layers (hereinafter referred to as a current collector of some example embodiments").

The current collector of some example embodiments may not only have the advantages 1) and 2) of the conventional current collector 2 discussed above by including the polymer in the functional layer, but may also have the following additional advantages 3) and 4) discussed below by further including the foaming agent in the functional layer, compared with the conventional current collector 2.
3) The current collector of some example embodiments has faster responsiveness than the conventional current collector 2. When the current collector according to some example embodiments has local short circuits, generating Joule's heat, the foaming agent may be activated (e.g., foamed) faster than the thermal shrinkage of the polymer. For example, based on the time that Joule's heat is generated, the thermal shrinkage of the polymer may begin within several minutes, but the activation of the foaming agent may begin within several seconds.
4) A resulting material foamed by the foaming agent (hereinafter, referred to as a "foam") may have about 1.1 times to about 300 times a larger volume than before being foamed by the foaming agent. Such a large foam may remedy or fix the deformed portions of the current collector where local short circuits occur and also, hinder or block potential risks such as leakage of an electrolyte solution, and the like.

In short, the current collector according to some example embodiments may reduce or suppress the electric short circuits, thermal runaway, and/or explosion of rechargeable lithium batteries by physical and/or chemical factors by inserting the functional layer including the foaming agent and the polymer between two different current collectors (i.e., the first and second metal layers).

Accordingly, the current collector according to some example embodiments, when applied to at least one electrode of the positive and negative electrodes, may enable safe operation of the rechargeable lithium batteries. These effects of the current collector according to some example embodiments, even when energy density of the rechargeable lithium batteries is increased, may still be effective.

Hereinafter, the current collector of some example embodiments will be described in more detail.

### Foaming agent

The foaming agent in the functional layer is activated (e.g., foamed) by Joule heat generated in the current collector of some example embodiments, remedying or fixing the deformed phase of the current collector where a local short circuit occurred, and hindering or blocking potential hazards such as leakage of an electrolyte solution.

The foaming agent in the functional layer may be or include at least one of a physical foaming agent, a chemical foaming agent, or a combination thereof.

The physical foaming agent can be activated (e.g., foamed) by a phase change, and the like, and may include an aliphatic hydrocarbon, a fluorinated aliphatic hydrocarbon, or a combination thereof.

The physical foaming agent may be or include at least one of expanded graphite, methane, ethane, propane, n-butane, isobutane, n-pentane, isopentane, neopentane, methanol, ethanol, n-propanol, isopropanol, methyl fluoride, perfluoromethane, ethyl fluoride, 1,1-difluoroethane, trifluoroethane, 1,1,1,2-tetrafluoroethane, pentafluoroethane, difluoromethane, perfluoroethane, 2,2-difluorobutane, perfluorocyclobutane, methyl chloride, methylene chloride, ethyl chloride, 1,1,1-trichloroethane, 1,1-dichloro-1-fluoroethane (HCFC-141b), 1-chloro-1,1-difluoroethane (HCFC-142b), chlorodifluoromethane (HCFC-22), 1,1-dichloro-2,2,2-trifluoroethane (HCFC-123), 1-chloro-1,2,2,2-tetrafluoroethane (HCFC-124), trichloromonofluoromethane (CFC-11), dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, dichlorohexafluoropropane, or a combination thereof.

When forming the functional layer through a solvent casting method, prefoaming of the physical foaming agent can be reduced or suppressed by encapsulating the physical foaming agent using a different type of polymer.

The chemical foaming agent can be activated (e.g., foamed) by a chemical reaction, and is divided into an inorganic chemical foaming agent and an organic chemical foaming agent depending on the composition of the foaming agent.

The inorganic chemical foaming agent may include at least one of sodium bicarbonate (NaHCO₃), ammonium bicarbonate (NH₄HCO₃), sodium borohydride (NaBH₄), or a combination thereof.

The organic chemical foaming agent may include at least one of hydrazide, azodicarbonamide, p,p'-oxybis(benzenesulfonylhydrazide), dinitroso pentamethylene tetramine, an oligomer thereof, a polymer thereof, or a combination thereof.

For example, the expanded graphite can be the foaming agent. Compared to other foaming agents, graphite before expansion has electrical conductivity with a d-spacing of about 3.33 Å, and thus in addition to compensating for the insufficient conductivity of the thin film-coated metal layer, the interplanar distance of the graphite layers increases to tens to hundreds of µm during expansion, which has the advantage of inducing a sharp drop in the conductivity of the expanded graphite with high expansion.

### Polymer

As the polymer in the functional layer, a polymer having desired or advantageous electrical insulating properties and chemical resistance can be used.

Desirably, the polymer may have an elongation that is approximately about 1% to about 2.0% higher than the elongation of the first metal layer and the second metal layer, but may have a heat distortion temperature that is lower than the ignition temperature of the electrolyte solution.

The polymer having the above characteristics may be or include a thermoplastic resin. For example, the thermoplastic resin may be or include at least one of polypropylene (PP), polyethylene (PE), polyethylene terephthalate (PET), or a combination thereof.

The polymer may have a thickness non-uniformity of about 0.01 to about 7.5%, about 0.05 to about 5.0%, or about 0.1 to about 4.0% in the machine direction (MD direction). When the thickness uniformity exceeds the above range, there is a risk of insulation breakdown, tearing, and worsening of the appearance, which may cause a decrease in electrode yield, a decrease in battery capacity, and/or a short circuit, thereby reducing the reliability of the rechargeable lithium battery.

The intrinsic viscosity of the polymer, measured according to ASTM D4603-03, may be about 0.01 dL/g to about 5 dL/g, about 0.1 dL/g to about 3 dL/g, or about 0.6 dL/g to about 1.0 dL/g. Within this range, the functional layer including the polymer can be molded into a film form.

The weight ratio of foaming agent to the polymer in the functional layer may be in a range of about 0.1:99.9 to about 20:80, about 0.2:99.8 to about 15:85, or about 0.5:99.5 to about 10:90. Within any of the above ranges, the effects of the foaming agent and the polymer can be increased.

### Plasticizer

A plasticizer may be added to the functional layer to control elongation.

The plasticizer may be or include at least one of glycerin, ethylene glycol, polyethylene glycol, propylene glycol, diethylene glycol, triethylene glycol, propylene, ethylene, ethylene phthalate, an oligomer thereof, a polymer thereof, or a combination thereof.

The ratio of plasticizer to polymer in the functional layer may be in a range of about 10:90 to about 0.1:99.9, about 5:95 to about 0.2:99.8, or about 2:98 to 0.5: about 99.5. Within any of the above ranges, the elongation of the functional layer can be increased compared to before adding the plasticizer.

### Metal layer (First Metal Layer and Second Metal Layer)

The first metal layer and the second metal layer may be electrically conductive layers in common, may be electrically conductive in a surface direction, and may not be electrically conductive in a thickness direction.

For example, the first metal layer and the second metal layer may each independently include at least one of aluminium (Al), nickel (Ni), copper (Cu), iron (Fe), or a combination thereof.

For a more detailed example, when applying the current collector of some example embodiments to the positive electrode, aluminium (Al) may be the first metal layer and the second metal layer, and when applying the current collector of some example embodiments to the negative electrode to the positive electrode, copper (Cu) may be the first metal layer and the second metal layer.

The thickness ratio of the first metal layer and the second metal layer may be about 3:7 to about 7:3, or about 4:6 to about 6:4. For example, the first metal layer and the second metal layer may have the same thickness.

The sum of the thicknesses of the first metal layer and the second metal layer may be less than or equal to about 40%, less than or equal to about 30%, or less than or equal to about 25% of 100% of the total thickness of the current collector. Within any of the above ranges, the effects of the first metal layer and the second metal layer, and the effects of the functional layer can be harmonized.

Depending on the thickness of the metal layer, the sheet resistance of the current collector may vary. For example, when the metal layer has only the functional layer without the first metal layer and the second metal layer, the sheet resistance of the metal layer may be less than about 0.01 mΩ/sq. On the other hand, the sheet resistance of the current collector including the first metal layer and the second metal layer may be greater than or equal to about 0.01 mΩ/sq, and may increase with the thickness of the first metal layer and the second metal layer to reach about 12.4 mΩ/sq.

The sheet resistance of the current collector can be typically measured using a 4-point probe device that can measure the sheet resistance of bulk thin films.

The first metal layer and the second metal layer may be formed through deposition, coating, laminating, electroplating, etc.

### Adhesive Layer

An adhesive layer may be further included at an interface between the first metal layer and/or the second metal layer and the functional layer.

The adhesive layer may improve adhesive force and weldability between the polymer in the functional layer and the first metal layer and/or the second metal layer. The high bonding energy of metal-oxygen at the atomic level can enhance the interfacial adhesive force, and the adhesive force can be proportional (desirably based on metal-O-C bond) with the atomic content containing lone pairs in the functional layer.

The adhesive layer can be formed by physically and/or chemically functionalizing the surface of the functional layer using single molecules, oligomers, polymers, or a combination thereof containing a large amount of highly electronegative atoms (for example, polymethyl methacrylate (PMMA) including at least one carbonyl group, polycarbonate (PC), polyamide (PA), polyetheretherketone (PEEK), polyetherimide (PEI), acrylonitrile-butadiene-styrene (ABS), or a combination thereof).

In particular, plasma treatment or corona discharge treatment for chemical functionalization enables uniform treatment on the film surface and can increase the effect depending on the type of gas in the processing atmosphere. Nitrogen, oxygen, argon, silane gas, carbon dioxide gas, and the like, can be the gas for the atmosphere, but a mixed gas containing oxygen and/or nitrogen may be desirable, and by plasma treatment, at least one of ether groups, carbonyl groups, ester groups, carboxyl groups, hydroxy groups, and amide groups are uniformly functionalized on the film surface, thereby improving the uniform adhesion of various metal and alloy layers, including aluminium and copper, to the electrode, and improving reliability of the electrode.

For example, a first adhesive layer may be further included between the first metal layer and the functional layer, a second adhesive layer may be further included between the second metal layer and the functional layer, or both the first adhesive layer and the second adhesive layer may be further included.

The functional layer may have one of a single-layer structure and a multi-layer structure. The functional layer having the single-layer structure may comprise one layer including the polymer and the foaming agent. The functional layer having the multi-layer structure may comprise a polymer layer including the polymer, and a foaming agent layer including the foaming agent, wherein the foaming agent layer is located at least one of between the first metal layer and the polymer layer, and between the polymer layer and the second metal layer.

### Electrode and Rechargeable Lithium Battery

Some example embodiments provide an electrode including the current collector of the above example embodiments.

The electrode may be or include a positive electrode or a negative electrode.

Some example embodiments include a rechargeable lithium battery including a positive electrode including a positive electrode current collector, a negative electrode including a negative electrode current collector, and an electrolyte between the positive electrode and the negative electrode, wherein at least one of the positive electrode current collector and the negative electrode current collector includes the current collector of the above example embodiments.

In other words, in one rechargeable lithium battery, the current collector of some example embodiments can be applied as a positive electrode current collector, a negative electrode current collector, or both.

Hereinafter, excluding overlapping descriptions, the electrode and rechargeable lithium battery including the current collector of the above example embodiments will be described in detail.

### Positive Electrode Active Material

The positive electrode active material may be or include a compound (lithiated intercalation compound) capable of intercalating and deintercalating lithium. Specifically, one or more types of composite oxides of lithium and a metal including at least one of cobalt, manganese, nickel, and combinations thereof may be used.

The composite oxide may be or include a lithium transition metal composite oxide, and specific examples may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1 ); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11: Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² each are or include independently one or more of Al, B, Ba, Ca, Ce, Co, Cr, Cu, Fe, Mg, Mn, Mo, Nb, Si, Sn, Sr, Ti, V, W, and Zr, and X is or include one or more of F, P, and S.

In Chemical Formula 11, for example, 0.6≤x1≤1, 0≤y1≤0.4, and 0≤z1≤0.4, or 0.8≤x1≤1, 0≤y1≤0.2, and 0≤z1≤0.2.

Chemical Formula 12: Liₐ₂Coₓ₂M³_{y2}O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M² is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: Liₐ₄Niₓ₄Mn_{y4}M⁵_{z4}O_{2-b4}X_{b4}

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, M⁵ is or includes one or more of Al, B, Ba, Ca, Ce, Cr, Fe, Mg, Mo, Nb, Si, Sn, Sr, Ti, V, W, and Zr, and X is or includes one or more of F, P, and S.

As an example, the positive electrode active material may be or include a high nickel-based positive electrode active material having a nickel content greater than or equal to about 80 mol%, greater than or equal to about 85 mol%, greater than or equal to about 90 mol%, greater than or equal to about 91 mol%, or greater than or equal to about 94 mol%, and less than or equal to about 99 mol% based on 100 mol% of metals excluding lithium in the lithium transition metal composite oxide. The high nickel-based positive electrode active materials can achieve high capacity and can be applied to a high-capacity, high-density rechargeable lithium battery.

### Positive Electrode

The positive electrode for a rechargeable lithium battery may include a current collector and a positive electrode active material layer on the current collector. The positive electrode active material layer may include a positive electrode active material, and may further include a binder and/or a conductive material.

For example, the positive electrode may further include an additive that can function as a sacrificial positive electrode.

An amount of the positive electrode active material may be about 90 wt% to about 99.5 wt%, and each amount of the binder and the conductive material may be about 0.5 wt% to about 5 wt% based on 100 wt% of the positive electrode active material layer.

The binder is configured to attach the positive electrode active material particles to each other and also to attach the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material may be configured to impart conductivity (e.g., electrical conductivity) to the electrode. Any material that does not cause chemical change (e.g., that does not cause an undesirable chemical change in the rechargeable lithium battery) and that conducts electrons, may be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material including at least one of copper, nickel, aluminium, silver, etc., in a form of a metal powder or a metal fiber; a conductive polymer such as a polyphenylene derivative; or a mixture thereof. Al may be the current collector, but is not limited thereto, and the current collector of the above-described example embodiment may be used. In the latter case, the first metal layer and the second metal layer may use aluminium (Al).

### Negative Electrode Active Material

The negative electrode active material may be or include at least one of a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may include a carbon-based negative electrode active material, for example, crystalline carbon, amorphous carbon or a combination thereof. The crystalline carbon may be or include graphite such as non-shaped, plate-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy may include lithium and a metal including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO₂, an Sn-based alloy, or a combination thereof.

The silicon-carbon composite may be or include a composite of silicon and amorphous carbon. According to some example embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

### Negative Electrode

A negative electrode for a rechargeable lithium battery includes a current collector and a negative electrode active material layer on the current collector. The negative electrode active material layer includes a negative electrode active material and may further include a binder and/or a conductive material.

For example, the negative electrode active material layer may include about 90 wt% to about 99 wt% of the negative electrode active material, about 0.5 wt% to about 5 wt% of the binder, and about 0.5 wt% to about 5 wt% of the conductive material.

The binder may be configured to attach the negative electrode active material particles to each other and also to attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is the negative electrode binder, the aqueous binder may further include a cellulose-based compound capable of imparting viscosity. The cellulose-based compound includes one or more of carboxylmethyl cellulose, hydroxypropylmethyl cellulose, methyl cellulose, or alkali metal salts thereof. The alkali metal may be or include at least one of Na, K, or Li.

The dry binder may be or include a polymer material capable of being fiberized, and may be or include, for example, at least one of polytetrafluoroethylene, polyvinylidene fluoride, polyvinylidene fluoride-hexafluoropropylene copolymer, polyethylene oxide, or a combination thereof.

The conductive material is included to provide electrode conductivity, and any electrically conductive material may be a conductive material unless the electrically conductive material causes a chemical change. Examples of the conductive material may be or include a carbon-based material such as at least one of natural graphite, artificial graphite, carbon black, acetylene black, ketjen black, a carbon fiber, a carbon nanofiber, a carbon nanotube, and the like; a metal-based material such as at least one of copper, nickel, aluminium, silver, and the like in a form of a metal powder or a metal fiber; a conductive polymer such as a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof, but is not limited thereto, and the current collector according some example embodiments may be used. In the latter case, the first metal layer and the second metal layer may include copper (Cu).

### Electrolyte Solution

The electrolyte solution for a rechargeable lithium battery includes a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, alcohol-based solvent, aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), etc. The ester-based solvent may include at least one of methyl acetate, ethyl acetate, n-propyl acetate, dimethylacetate, methylpropionate, ethylpropionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. The ketone-based solvent may include cyclohexanone. The alcohol-based solvent may include at least one of ethyl alcohol, isopropyl alcohol, and the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane or 1,4-dioxolane, sulfolanes, and the like.

The non-aqueous organic solvent may be used alone or in combination of two or more.

Additionally, when using a carbonate-based solvent, cyclic carbonate and chain carbonate can be mixed, and cyclic carbonate and chain carbonate may be mixed at a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of a lithium salt may include one, or more than one, of LiPF₆, LiBF₄, LiSbF₆, LiAsF₆, LiClO₄, LiAlO₂, LiAlCl₄, LiPO₂F₂, LiCl, Lil, LiN(SO₃C₂F₃)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate, (LiDFBOP), and lithium bis(oxalato)borate (LiBOB).

### Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a at least one of polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of or including any one or more of a polymer, a copolymer or mixture of two or more of polyolefin such as polyethylene or polypropylene, a polyester such as polyethyleneterephthalate, or polybutyleneterephthalate, polyacetal, polyamide, polyimide, polycarbonate, polyether ketone, polyaryl ether ketone, polyether imide, polyamideimide, polybenzimidazole, polyether sulfone, polyphenyleneoxide, a cyclic olefin copolymer, polyphenylenesulfide, polyethylenenaphthalate, a glass fiber, TEFLON (tetrafluoroethylene), and polytetrafluoroethylene.

The organic material may include a polyvinylidene fluoride-based polymer or a (meth)acrylic polymer.

The inorganic material may include inorganic particles including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

### Rechargeable Lithium Battery

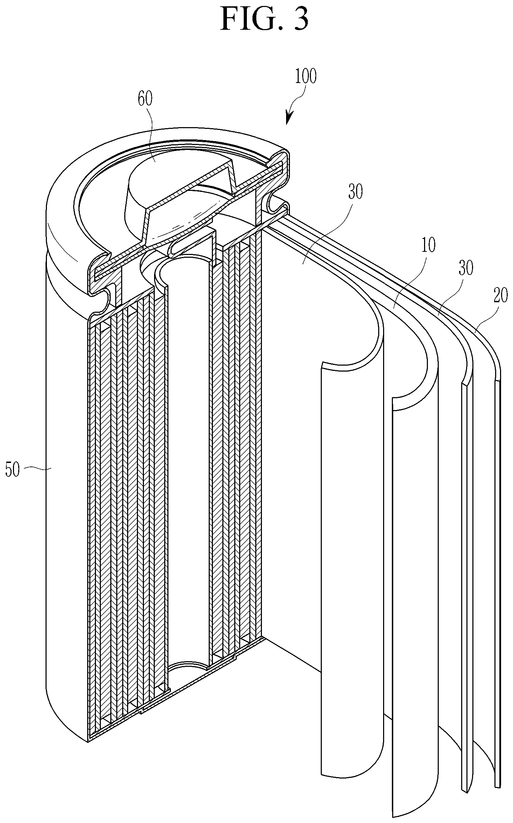

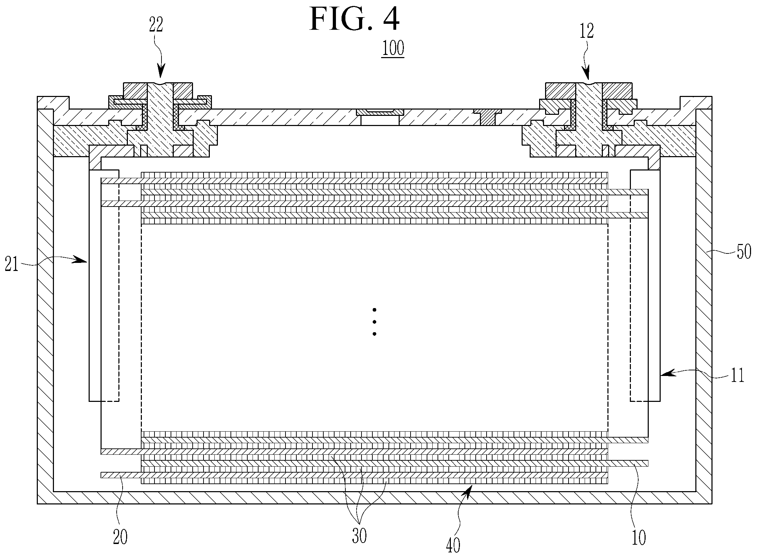

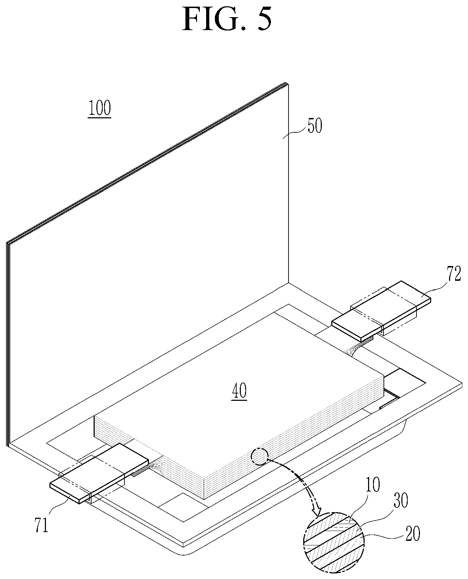

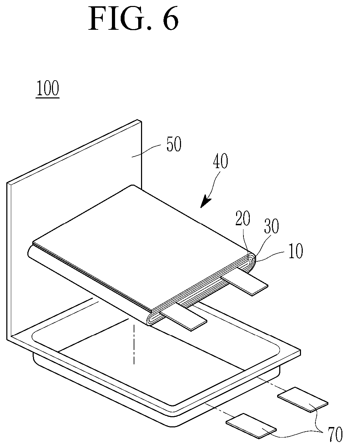

The rechargeable lithium battery may be classified into cylindrical, prismatic, pouch, or coin-type batteries, and the like depending on their shape. FIGS. 3 to 6 are schematic views illustrating a rechargeable lithium battery according to some example embodiments. FIG. 3 shows a cylindrical battery, FIG. 4 shows a prismatic battery, and FIGS. 5 and 6 show pouch-type batteries. Referring to FIGS. 3 to 6, the rechargeable lithium battery 100 may include an electrode assembly 40 including a separator 30 between a positive electrode 10 and a negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 sealing the case 50, as illustrated in FIG. 3. In addition, in FIG. 4, the rechargeable lithium battery 100 may include a positive lead tab 11, a positive terminal 12, a negative lead tab 21, and a negative terminal 22. As shown in FIGS. 5 and 6, the rechargeable lithium battery 100 includes an electrode tab 70 illustrated in FIG. 6, or a positive electrode tab 71 and a negative electrode tab 72 illustrated in FIG. 5, the tabs 70/71/72 forming an electrical path for inducing the current formed in the electrode assembly 40 to the outside of the battery 100.

The rechargeable lithium battery according to some example embodiments may be applicable to automobiles, mobile phones, and/or various types of electrical devices, but the present disclosure is not limited thereto.

Hereinafter, examples of the present disclosure and comparative examples are described. These examples, however, are not in any sense to be interpreted as limiting the scope of the disclosure.

### Example 1

### (1) Manufacturing of positive electrode current collector

Polyethylene terephthalate (PET) with an intrinsic viscosity of 0.70 dL/g was used as a polymer, and expanded graphite was used as a foaming agent.

The polymer and the foaming agent in a weight ratio of 98:2 were mixed in a dimethyl sulfoxide (DMSO) solvent and subsequently used to form a functional layer (a thickness: 7.8 µm) as a single-layer film through a solvent casting method. Subsequently, in order to improve adherence between each of the first and second metal layers and the polymer in the functional layer, the functional layer was plasma-treated under a nitrogen atmosphere.

In a vacuum atmosphere reduced to 10⁻⁵ Torr to 10⁻⁶ Torr, an electric field was applied to an aluminium filament to gasify it, an aluminium layer (each thickness: 1.1 µm) was deposited on one surface and the other surface of the functional layer. The aluminium layer deposited on one surface of the functional layer was called to be the first metal layer, while another aluminium layer deposited on the other surface of the functional layer was called to be the second metal layer.

While applying the electric field, while the functional layer was rotated in an MD direction, the first and second metal layers were respectively deposited at a deposition rate of 3 Angstroms/s to 4 Angstroms/s, until the first and second metal layers reached each target thickness.

On the other hand, in the functional layer, pin holes were inevitably formed. Accordingly, in order to short-circuit electrical connection between the first and second metal layers by the pin holes, the electric field was applied between two different metal layers. In addition, the electric field was applied to any two points in the same metal layer to strengthen connection of metal particles constituting each of the first and second metal layers, thereby improving reliability of the metal layers.

### (2) Manufacturing of Positive Electrode

LiNi_{0.75}Mn_{0.23}Al_{0.02}O₂ as a positive electrode active material, polyvinylidene fluoride as a binder, and acetylene black as a conductive material were mixed in a weight ratio of 96:3:1 and then, dispersed in N-methyl pyrrolidone to prepare a positive electrode active material slurry.

The positive electrode active material slurry was coated on the positive electrode current collector, and subsequently dried at 110 °C and pressed to manufacture a positive electrode.

### (3) Manufacturing of Negative Electrode

A negative electrode active material was prepared by mixing artificial graphite and silicon particles in a weight ratio of 93.5:6.5, and the negative electrode active material : a styrene-butadiene rubber binder : carboxylmethyl cellulose were mixed in a weight ratio of 97:1:2 and then, dispersed in distilled water to prepare a negative electrode active material slurry.

The negative electrode active material slurry was coated on a 10 µm-thick Cu foil and then, dried at 100 °C and pressed to manufacture a negative electrode.

### (4) Preparation of Electrolyte Solution

An electrolyte solution was prepared by mixing ethylene carbonate (EC) : ethylmethyl carbonate (EMC) : dimethyl carbonate (DMC) in a volume ratio of 20:40:40 to prepare a carbonate-based solvent and dissolving 1.5 M of lithium salt (LiPF₆) in the carbonate-based solvent.

### (5) Manufacturing of Rechargeable Lithium Battery Cell

The positive and negative electrodes were assembled with a 25 µm-thick polyethylene separation membrane to manufacture an electrode assembly, the electrode assembly was housed in a prismatic case, and the electrolyte solution was injected thereinto, manufacture a rechargeable lithium battery cell.

### Example 2

A positive electrode current collector, a positive electrode, and a rechargeable lithium battery cell of Example 2 were manufactured in the same manner as in Example 1, with a difference that each thickness of the first and second metal layers was changed to 1.8 µm, and the thickness of the functional layer in the form of a single-layer film was changed to 6.4 µm.

### Example 3

A positive electrode current collector, a positive electrode, and a rechargeable lithium battery cell of Example 3 were manufactured in the same manner as in Example 1, with a difference that each thickness of the first and second metal layers was changed to 1.9 µm, and the thickness of the functional layer in the form of a single-layer film was changed to 6.2 µm.

### Example 4

A positive electrode current collector, a positive electrode, and a rechargeable lithium battery cell of Example 4 were manufactured in the same manner as in Example 1, with a difference that each thickness of the first and second metal layers was changed to 2.1 µm, and the thickness of the functional layer in the form of a single-layer film was changed to 5.8 µm.

### Example 5

A positive electrode current collector, a positive electrode, and a rechargeable lithium battery cell of Example 5 were manufactured in the same manner as in Example 1, with a difference that each thickness of the first and second metal layers was changed to 3.1 µm, and the thickness of the functional layer in the form of a single-layer film was changed to 3.8 µm.

### Example 6: Functional Layer having Multi-layer Structure

A positive electrode current collector, a positive electrode, and a rechargeable lithium battery cell of Example 6 were manufactured in the same manner as in Example 1, with a difference that the polyethylene terephthalate with an intrinsic viscosity of 0.70 dL/g (PET) was changed to a polymer single film with a thickness of 3.8 µm, and a 2 µm-thick foamed functional layer including expanded graphite was disposed between the first and second metal layers and the polymer single film.

The foamed functional layer (a thickness: 1 µm) was formed by mixing the polymer and the foaming agent in a weight ratio of 20:80 in a dimethyl sulfoxide (DMSO) solvent, and subsequently using a solvent casting method.

The obtained foamed functional layer was laminated with the plasma-treated polymer single film to form a multi-layer structure of foamed functional layer/PET film/foamed functional layer.

### Example 7: Case Further Including Adhesive Layer

A positive electrode current collector, a positive electrode, and a rechargeable lithium battery cell of Example 7 were manufactured in the same manner as in Example 1, with a difference that a separate organic-metal adhesive layer was added onto the functional layer.

The organic-metal adhesive layer was formed by preparing a 2 wt% acrylonitrile-butadiene-styrene (ABS) solution prepared by using acetone as a solvent, coating the 2 wt% acrylonitrile-butadiene-styrene (ABS) solution on the plasma-treated functional layer to form each organic-metal adhesive layer with a thickness of 0.8 µm.

### Comparative Example 1 (Ref.)

A 14 µm-thick Al foil itself was used as a positive electrode current collector.

With the above difference, a positive electrode and a rechargeable lithium battery cell of Comparative Example 1 were manufactured in the same manner as in Example 1.

### Comparative Example 2

A positive electrode and a rechargeable lithium battery cell of Comparative Example 2 were manufactured in the same manner as in Example 1, with a difference that the foaming agent was not used.

For reference, the positive electrode current collectors of Examples 1 to 7 and Comparative Examples 1 to 2 were summarized with respect to a thickness ratio of first metal layer : functional layer : second metal layer and sheet resistance of the positive electrode current collectors in Table 1.

The sheet resistance of the positive electrode current collectors was measured by using a 4-point probe device, which is generally used for measuring sheet resistance of a bulk thin film. Here, the 4-point probe is a single row of four probes spaced 1 mm apart, and the measuring temperature was 25 °C.

**Table 1:**

| | Thickness ratio of first metal layer: functional layer: second metal layer | Sheet resistance (mΩ/sq) |
|---|---|---|
| Example 1 | 1.1 : 7.8 : 1.1 | 12.2 |
| Example 2 | 1.8 : 6.4 : 1.8 | 4.1 |
| Example 3 | 1.9 : 6.2 : 1.9 | 3.88 |
| Example 4 | 2.1 : 5.8 : 2.1 | 2.41 |
| Example 5 | 3.1 : 3.8 : 3.1 | 0.06 |
| Example 6 | 1.1 : 1.0* : 3.8 :1.0* : 1.1 | 9.7 |
| Example 7 | 1.1:0.8**:7.8:0.8**:1.1 | 12.4 |
| Comparative Example 1 | 0 : 14 : 0 | < 0.01 |
| Comparative Example 2 | 1.1 : 7.8 : 1.1 | 12.1 |

| | | |
|---|---|---|
| In Table 1, * indicates a foamed functional layer (PET : expanded graphite = 20:80 (w:w)), ** indicates an organic-metal adhesive layer. | | |

### Evaluation Example 1: Evaluation of Positive Electrode Current Collector

The positive electrode current collectors of Examples 1 to 7 and Comparative Examples 1 to 2 were evaluated with respect to characteristics in the following methods, and the results are shown in Table 2.

### (1) Elongation

The elongation was measured according to a standard test method ASTM D882 by using UTM 6800 equipment made by Instron.

### (2) Puncture Strength

The puncture strength was measured according to a standard test method ASTM F1306 by using UTM 6800 equipment made of Instron.

### Evaluation Example 2: Evaluation of Rechargeable Lithium Battery Cell

The rechargeable lithium battery cells of Examples 1 to 7 and of Comparative Examples 1 to 2 were evaluated with respect to lifespan characteristics in the following method, and the results are shown in Table 2.

The rechargeable lithium battery cells were 200 cycles charged and discharged under the condition of 0.33 C charge (CC/CV, 4.45 V, 0.025 C Cut-off) /1.0 C discharge (CC, 2.5 V Cut-off) and 25 °C to calculate a capacity retention rate according to Equation 1.Capatity retention rate [%]=Discharge capacity after 200 cyles / Discharge capacity after 1st cycle)*100

**Table 2:**

| | Evaluation of positive electrode current collector | | Evaluation of rechargeable lithium battery cell |
|---|---|---|---|
| | Elongation [%] | Puncture strength [g_{f}] | Capacity retention rate [%] @200 cyc. |
| Example 1 | 7.2 | 655 | 95 |
| Example 2 | 7.1 | 662 | 96 |
| Example 3 | 7.1 | 660 | 96 |
| Example 4 | 7.0 | 662 | 96 |
| Example 5 | 7.2 | 685 | 97 |
| Example 6 | 7.8 | 672 | 98 |
| Example 7 | 7.5 | 666 | 96 |
| Comparative Example 1 | 0.3 | 206 | 98 |
| Comparative Example 2 | 7.0 | 661 | 96 |

Referring to Table 2, and based on Comparative Examples 1 and 2, there appears to be a tradeoff between the elongation, the puncture strength and the capacity retention rate. However, Examples 1 to 7, compared with Comparative Examples 1 and 2, exhibited an appropriate capacity retention rate (95% or more), and simultaneously exhibited elongation and puncture strength respectively satisfying each desirable range (7.0% or more and 660% or more, respectively).

Accordingly, the current collector according to some example embodiments, which was represented by Examples 1 to 7, reduces or suppressed electric shorts, thermal runaway, and/or explosion due to physical and/or chemical factors by inserting a functional layer including a foaming agent and a polymer between two different current collectors ( e.g., the first and second metal layers).

On the other hand, Examples 1 to 7 exhibited varying capacity retention, elongation, and puncture strength depending on each thickness of the metal layers and the functional layer, a structure of the functional layer, and the like. Accordingly, various desired properties of a current collector and a rechargeable lithium battery may be achieved by adjusting the capacity retention, elongation and puncture strength according to each thickness of the metal layers and the functional layer, a structure of the functional layer, and the like.

Herein, for convenience, the current collector was manufactured as a positive electrode current collector, but even when manufactured as a negative electrode current collector, the same desired or advantageous performance as in Examples 1 to 7 may be achieved.

Accordingly, the current collector according to some example embodiments was applied to at least one electrode of the positive and negative electrodes, which enabled safe operation of rechargeable lithium battery cells. Such an effect of the current collector according to some example embodiments, even when energy density of rechargeable lithium batteries was increased, was still effective.

In addition, referring to Examples 1 to 7, the effect was controlled by adjusting a weight ratio of the foaming agent : polymer in the functional layer, a thickness ratio of first metal layer : functional layer : second metal layer, and the like.

While this disclosure has been described in connection with what is presently considered to be practical example embodiments, it is to be understood that the disclosure is not limited to the disclosed example embodiments, but, on the contrary, is intended to cover various modifications and equivalent arrangements included within the scope of the appended claims.

### Description of Symbols

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A current collector for a rechargeable lithium battery, the current collector comprising
a first metal layer;
a second metal layer; and
a functional layer between the first metal layer and the second metal layer, the functional layer including a polymer and a foaming agent.

2. The current collector as claimed in claim 1, wherein the functional layer has one of a single-layer structure and a multi-layer structure.

3. The current collector as claimed in claim 2, wherein the functional layer having the single-layer structure comprises one layer including the polymer and the foaming agent.

4. The current collector as claimed in claim 2, wherein the functional layer having the multi-layer structure comprises:
a polymer layer including the polymer, and
a foaming agent layer including the foaming agent,
wherein the foaming agent layer is located at least one of: between the first metal layer and the polymer layer, and
between the polymer layer and the second metal layer.

5. The current collector as claimed in any one of claims 1 to 4, wherein the foaming agent comprises at least one of a physical foaming agent, an inorganic chemical foaming agent, and an organic chemical foaming agent.

6. The current collector as claimed in claim 5, wherein the physical foaming agent comprises at least one of expanded graphite, methane, ethane, propane, n-butane, isobutane, n-pentane, isopentane, neopentane, methanol, ethanol, n-propanol, isopropanol, methyl fluoride, perfluoromethane, ethyl fluoride, 1,1-difluoroethane, trifluoroethane, 1,1,1,2-tetrafluoroethane. pentafluoroethane, difluoromethane, perfluoroethane, 2,2-difluorobutane, perfluorocyclobutane, methyl chloride, methylene chloride, ethyl chloride, 1,1,1-trichloroethane, 1,1-dichloro-1-fluoroethane (HCFC-141b), 1-chloro-1,1-difluoroethane (HCFC-142b), chlorodifluoromethane (HCFC-22), 1,1-dichloro-2,2,2-trifluoroethane (HCFC-123), 1-chloro-1,2,2,2-tetrafluoroethane (HCFC-124), trichloromonofluoromethane (CFC-11), dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, and dichlorohexafluoropropane.

7. The current collector as claimed in claim 5, wherein the inorganic chemical foaming agent comprises at least one of sodium bicarbonate (NaHCO₃), ammonium bicarbonate (NH₄HCO₃), and sodium borohydride (NaBH₄).

8. The current collector as claimed in claim 5, wherein the organic chemical foaming agent comprises at least one of hydrazide, azodicarbonamide, p,p'-oxybis(benzenesulfonylhydrazide), dinitroso pentamethylene tetramine, an oligomer thereof, and a polymer thereof.

9. The current collector as claimed in any one of claims 1 to 8, wherein the polymer comprises a thermoplastic resin, optionally wherein the thermoplastic resin comprises at least one of polypropylene (PP), polyethylene (PE), and polyethylene terephthalate (PET).

10. The current collector as claimed in any one of claims 1 to 9, wherein a weight ratio of the foaming agent to polymer in the functional layer is in a range of about 0.1:99.9 to about 20:80.

11. The current collector as claimed in any one of claims 1 to 10, wherein:
(i) the first metal layer and the second metal layer each independently comprise at least one of aluminium (Al), nickel (Ni), copper (Cu), and iron (Fe); and/or
(ii) a thickness ratio of the first metal layer and the second metal layer is about 3:7 to about 7:3; and/or
(iii) a sum of thicknesses of the first metal layer and the second metal layer is less than or equal to about 40% of a total thickness of 100% of the current collector; and/or
(iv) a sheet resistance of the current collector is in a range of about 0.01 mΩ/sq to about 12.4 mΩ/sq.

12. The current collector as claimed in any one of claims 1 to 11, wherein an adhesive layer is further included at least at one of the interface between the first metal layer and the functional layer, and the interface between the second metal layer and the functional layer, optionally wherein the adhesive layer comprises at least one of polymethyl methacrylate (PMMA) including a carbonyl group, polycarbonate (PC), polyamide (PA), polyether ether ketone (PEEK), polyetherimide (PEI), and acrylonitrile-butadiene-styrene (ABS).

13. An electrode comprising the current collector as claimed in any one of claims 1 to 12.

14. A rechargeable lithium battery, comprising:
a positive electrode including a positive electrode current collector;
a negative electrode including a negative electrode current collector; and
an electrolyte between the positive electrode and the negative electrode,
wherein at least one of the positive electrode current collector and the negative electrode current collector includes the current collector as claimed in any one of claims 1 to 12.

15. The rechargeable lithium battery as claimed in claim 14, further comprising:
a separator impregnated with the electrolyte between the positive electrode and the negative electrode.
